# EUROPÄISCHE PATENTSCHRIFT

(11) **EP 1 492 694 B1**
(45) Veröffentlichungstag und Bekanntmachung des Hinweises auf die Patenterteilung: **10.08.2005**
(21) Anmeldenummer: 03709822.5
(22) Anmeldetag: 04.04.2003
(51) Int. Cl.: B62D 27/02

(54) **Y-KNOTENSTRUKTUR EINES TRAGRAHMENS FÜR FAHRZEUGE**
Y-SHAPED NODE STRUCTURE FOR THE SUPPORTING FRAME OF A MOTOR VEHICLE
STRUCTURE DE LIAISON EN Y D'UN CADRE PORTEUR DE VEHICULE A MOTEUR

(30) Priorität: 09.04.2002 DE 10215441
(43) Veröffentlichungstag der Anmeldung: 05.01.2005
(73) Patentinhaber: ThyssenKrupp Stahl AG, 47166 Duisburg (DE)
(72) Erfinder: PATBERG, Lothar, 52074 Aachen (DE)
(74) Vertreter: Knauf, Rudolf, Dipl.-Ing.
(86) Internationale Anmeldenummer: PCT/EP2003/003510
(87) Internationale Veröffentlichungsnummer: WO 2003/084802

(56) Entgegenhaltungen:
- DE-C- 894 508
- US-A- 4 988 230
- US-A1- 2001 042 986
- PATENT ABSTRACTS OF JAPAN vol. 1996, no. 07, 31. Juli 1996 (1996-07-31) -& JP 08 061329 A (SHOWA ALUM CORP), 8. März 1996 (1996-03-08)

## Beschreibung

Die Erfindung betrifft eine aus zwei Hohlprofilen gebildete y-förmige Knotenstruktur eines Tragrahmens für Fahrzeuge sowie ein Verfahren zu deren Herstellung.

Eine solche Knotenstruktur wird in der US-A-2001/0042986 offenbart.

Knotenstrukturen für Fahrzeugtragrahmen sind aus der Praxis in verschiedenen Ausführungen bekannt. Die Crashsicherheit des Fahrzeugtragrahmens wird dabei maßgeblich von seiner Geometrie, d.h. von der Stellung der Elemente des Tragrahmens - in der Regel Hohlprofile - relativ zueinander und der Steifigkeit der Knotenstrukturen bestimmt. Insbesondere im Bereich der Anbindung der vorderen oder hinteren Längsträger an die Fahrgastzelle, welcher eine besonders belastete Crashzone darstellt, werden bevorzugt y-förmige Knotenstrukturen eingesetzt, um eine günstige Verteilung der bei einem Crash auftretenden Längskräfte auf die Fahrgastzelle zu erzielen. Um die Gefahr eines Kollabierens der Hohlprofile im Bereich der Knotenstruktur zu minimieren, ist die Knotenstruktur mit maximaler Steifigkeit auszulegen. Dazu ist bei herkömmlichen Konstruktionslösungen der Einsatz zusätzlicher verstärkender Elemente erforderlich, was zu einer unerwünschten Erhöhung des Gesamtgewichts des Fahrzeugtragrahmens führt. Insbesondere bei dem Einsatz der aufgrund fehlender Schweißflansche gewichtsgünstigen Innenhochdruckumform-Technologie (IHU) kann eine hinreichende Steifigkeit der Knotenstruktur nur unter Verwendung von Stützblechen erzielt werden, was den Gewichtsvorteil dieser Lösung teilweise wieder zunichte macht.

In der EP 0 568 251 B1 ist ein Tragrahmen für Fahrzeuge beschrieben, welcher aus mehreren Baugruppen auf Basis von Hohlprofilen besteht. Die Hohlprofile sind über Knotenstrukturen verschiedener Art in gestreckter oder rechtwinkliger Lage miteinander verbunden. Die Verbindung rechtwinklig zueinander angeordneter Profile, beispielsweise die Verbindung zwischen B-Säule und Seitenschweller, ist über eine T-förmige Knotenstruktur realisiert. Gemäß einer Ausführungsform eines solchen T-Knotens weist ein erstes Hohlprofil mit rechteckigem Querschnitt an seinem einen Ende zwei um jeweils 90° umgebogene, zueinander fluchtend angeordnete Abschnitte mit C-förmigem Querschnitt auf, an die ein zweites Hohlprofil angelegt und mit diesen verschweißt werden kann.

Eine dieser Ausführungsform ähnliche Knotenstruktur ist aus der DE 37 26 079 A1 bekannt. In dieser Druckschrift ist eine Türrahmenkonstruktion für Nutzfahrzeuge, insbesondere Omnibusse, beschrieben. Zentraler Bestandteil dieser Konstruktion ist ebenfalls eine T-Knotenstruktur zur Verbindung zweier im rechten Winkel zueinander stehender Hohlprofile. Dabei ist eines der Hohlprofile an seinem dem anderen Profil zugewandten Ende in seinen sich gegenüberliegenden Seitenflächen derart längs ausgeschnitten, daß zwei U-förmige Anschlußstücke entstehen, die zu einer gewünschten Übergangskontur verformbar und an das anzubindende Profil anlegbar sind. Beiden zitierten Druckschriften ist gemein, daß die jeweils beschriebenen Rahmenstrukturen größtenteils bzw. ausschließlich auf T-förmigen Knotenstrukturen basieren. Die Verbindung von Hohlprofilen über die hinsichtlich ihres Crashverhaltens vorteilhaften Y-Knotenstrukturen ist nicht beschrieben.

Der Erfindung liegt die Aufgabe zugrunde, eine Knotenstruktur der eingangs genannten Art zu schaffen, die eine maximale Steifigkeit aufweist und ohne zusätzliche Stützelemente auskommt, sowie ein Verfahren zu deren Herstellung.

Diese Aufgabe wird mit einer Knotenstruktur der eingangs genannten Art dadurch gelöst, dass die Knotenstruktur aus zwei Hohlprofilen besteht, von denen das erste Hohlprofil mindestens eine ebene Seite aufweist und entlang seines Umfangs bis auf einen in der ebenen Seite liegenden Steg durchtrennt und um diesen Steg aufgebogen ist, und das zweite Hohlprofil stirnseitig in die durch das Trennen und Aufbiegen entstandenen, einander zugekehrten Enden des ersten Hohlprofils eingesteckt ist, wobei das erste Hohlprofil an seinen Randbereichen mit dem zweiten Hohlprofil stoffschlüssig verbunden ist.

Der besondere Vorteil dabei ist, dass die in die Enden des ersten Hohlprofils eingesteckten Seitenwände des zweiten Hohlprofils die Knotenstruktur als Schottbleche von innen heraus verstärken und somit eine optimierte Steifigkeit der Knotenstruktur gewährleisten. Dadurch wird die Gefahr eines Kollabierens der Hohlprofile im Bereich der Knotenstruktur infolge eines Crashs minimiert. Das Anbringen zusätzlicher Teile zur Verstärkung der Knotenstruktur ist folglich nicht mehr notwendig, was zur Reduzierung des Gesamtgewichts des Tragrahmens beiträgt.

Bei einer vorteilhaften Ausgestaltung der Erfindung liegen die Konturen der beiden Hohlprofile möglichst spaltfrei aneinander. Daraus ergibt sich eine verbesserte Verteilung der im Crashfalle auf die Knotenstruktur wirkenden Längskräfte auf die von der Knotenstruktur abzweigenden Hohlprofile. Insbesondere wird das Auftreten punktueller Belastungsspitzen vermieden, da die Hohlprofile formschlüssigen aneinander liegen.

Nach einer weiteren Ausgestaltung der Erfindung weisen die einander zugekehrten Enden des ersten Hohlprofils dem Steg gegenüberliegende umgebogene Randbereiche auf, welche flach an dem zweiten Hohlprofil anliegen. Diese bilden für das Verbinden der beiden Hohlprofile durch Schweißen, Löten oder ein anderes Fügeverfahren gut nutzbare Anbindungszonen.

Wird die Knotenstruktur in besonders belasteten Bereichen des Fahrzeugtragrahmens eingesetzt, ist es zweckmäßig, dass auf den an die ebene Seite angrenzenden Seiten an den Stellen, wo das erste Hohlprofil durchtrennt ist, jeweils ein im wesentlichen rechteckförmiger Streifen symmetrisch zum Trennschnitt ausgeschnitten ist. Somit wird eine belastungsbedingte Kerbwirkung in den Ecken der einander zugekehrten Enden des ersten Hohlprofils weitgehend vermieden. In diesem Zusammenhang erweist es sich als besonders vorteilhaft, wenn der ausgeschnittene Streifen abgerundete Ecken aufweist. Bei einem Einsatz der Knotenstruktur in weniger belasteten Bereichen des Fahrzeugtragrahmens kann auf diese Ausgestaltung im Sinne einer kostengünstigen Fertigung verzichtet werden.

Ferner wird die oben angegebene Aufgabe durch ein Verfahren zur Herstellung der erfindungsgemäßen Knotenstruktur mit den folgenden Schritten gelöst:
a) Auftrennen des ersten Hohlprofils entlang seines Umfangs bis auf einen in der ebenen Seite liegenden Steg,
b) Aufbiegen des ersten, teilweise aufgetrennten Hohlprofils um den in der ebenen Seite liegenden Steg,
c) Einstecken des zweiten Hohlprofils in die durch das Trennen und Aufbiegen entstandenen, einander zugekehrten Enden des ersten Hohlprofils und
d) stoffschlüssiges Verbinden des zweiten Hohlprofils mit dem ersten Hohlprofil an dessen Randbereichen.

Durch das Aufbiegen des ersten Hohlprofils kann die Geometrie der Knotenstruktur ohne übermäßigen fertigungstechnischen Aufwand variabel gestaltet werden. Besonders vorteilhaft ist dabei, dass durch die Biegeoperation auch kleine Winkel zwischen den Enden des aufgetrennten ersten Hohlprofils realisiert werden können. Dies wirkt sich positiv auf die Belastbarkeit der Knotenstruktur aus, da die im Crashfalle auftretenden Längskräfte bei einem kleinen Winkel nur geringfügig umgelenkt werden müssen.

Nach einer weiteren Ausgestaltung des Verfahrens ist vorgesehen, dass das erste Hohlprofil vor dem Auftrennen entlang eines Teils seines Umfangs ausgeformt wird und dass der Trennschnitt mittig durch die Ausformung gelegt wird. Dadurch lassen sich mithilfe des Trennvorgangs in geeigneter Weise an den einander zugekehrten Enden des ersten Hohlprofils vorstehende Randbereiche erzeugen, welche sich flächig an die Wände des zweiten Hohlprofils anlegen und günstige geometrische Verhältnisse für die stoffschlüssige Verbindung der beiden Hohlprofile und damit auch hinsichtlich ihrer Belastbarkeit schaffen. Die Ausformung wird dabei bevorzugt durch Innenhochdruckformen in das erste Hohlprofil eingebracht.

Eine weitere vorteilhafte Ausgestaltung des Verfahrens sieht vor, dass das Auftrennen des ersten Hohlprofils durch Laserstrahlschneiden erfolgt. Dies ermöglicht präzise geschnittene Kanten, wodurch ebenfalls das stoffschlüssige Verbinden der Hohlprofile erleichtert wird.

Die Hohlprofile können durch Schweißen oder Löten verbunden werden, wobei sich der Einsatz von Laserstrahlung zum Schweißen oder Löten wiederum als besonders vorteilhaft erweist.

Im folgenden wird die Erfindung anhand einer ein Ausführungsbeispiel darstellenden Zeichnung erläutert. Im einzelnen zeigen:
- Fig. 1: eine aus Hohlprofilen gebildete y-förmige, verschweißte Knotenstruktur eines Tragrahmens für Fahrzeuge in Draufsicht,
- Fig. 2: die Knotenstruktur der Fig. 1 in perspektivischer Ansicht,
- Fig. 3: die Knotenstruktur der Fig. 1 in Draufsicht unter Weglassen der Schweißnähte,
- Fig. 4: die Knotenstruktur der Fig. 3 im Querschnitt nach Linie A-A der Fig. 3,
- Fig. 5: die Knotenstruktur der Fig. 3 im Querschnitt nach Linie B-B der Fig. 3,
- Fig. 6: die Knotenstruktur der Fig. 3 im Querschnitt nach Linie C-C der Fig. 5,
- Fig. 7: die Knotenstruktur der Fig. 3 im Querschnitt nach Linie D-D der Fig. 3 und
- Fig. 8 a-e: die Verfahrensschritte zur Herstellung der Knotenstruktur der Fig. 1,

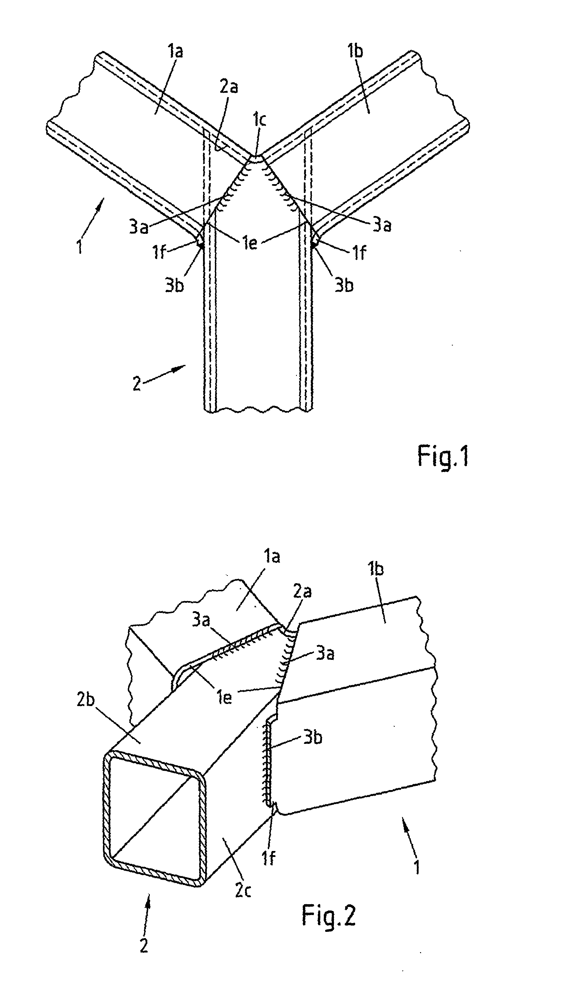

Die in Fig. 1 in Draufsicht dargestellte Knotenstruktur weist zwei Hohlprofile 1, 2 mit im wesentlichen quadratischem Querschnitt auf, welche zusammen eine y-Form bilden und form- und stoffschlüssig miteinander verbunden sind. Das erste Hohlprofil ist entlang seines Umfangs bis auf einen Steg 1c aufgetrennt und um den Steg 1c aufgebogen, so dass zwei einander zugekehrte Enden 1a, 1b des Hohlprofils 1 entstehen. In die Enden 1a, 1b ist das weitere Hohlprofil 2 mit seinem v-förmig eingeschnittenen Ende derart eingesteckt, dass seine Stirnseite 2a möglichst spaltfrei an der gemeinsamen Innenseite 1d der beiden Enden 1a, 1b des ersten Hohlprofils 1 anliegt. Die beiden Enden 1a, 1b weisen dem Steg 1c jeweils gegenüberliegende umgebogene Randbereiche 1f und angrenzende zurückgesetzte flache Randbereiche 1e auf, wobei die umgebogenen Randbereiche 1f an den Seitenflächen 2c und die zurückgesetzten flachen Randbereiche 1e an der Ober- und Unterseite 2b des Hohlprofils 2 anliegen. An den zurückgesetzten flachen Randbereichen 1e sind die beiden Enden 1a, 1b des Hohlprofils 1 mit der Ober- und Unterseite 2b des Hohlprofils 2 durch Schweißnähte 3a verbunden. An den umgebogenen Randbereichen 1f sind die Enden 1a, 1b des Hohlprofils 1 durch Schweißnähte 3b mit den Seitenflächen 2c des Hohlprofils 2 verbunden.

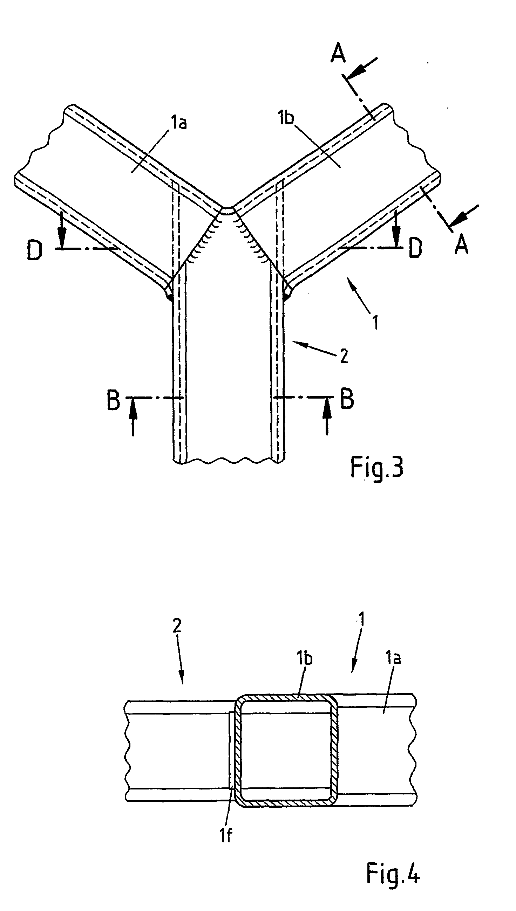

In den Figuren 4 bis 7 sind verschiedene Querschnitte der Knotenstruktur gezeigt. Aus Gründen der Übersichtlichkeit ist bei diesen Zeichnungen auf die Darstellung der Schweißnähte 3a, 3b verzichtet.

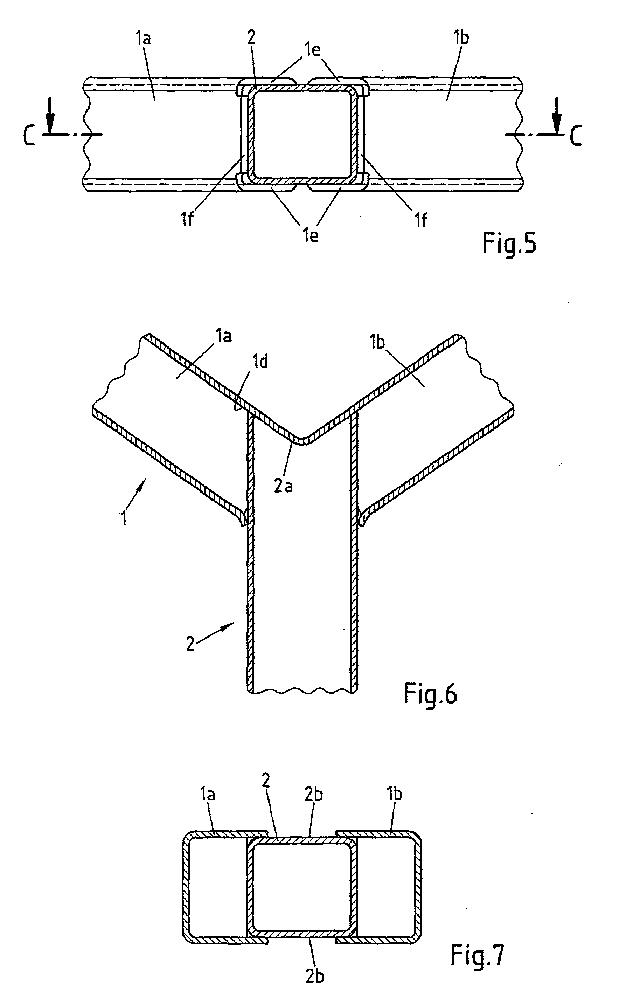

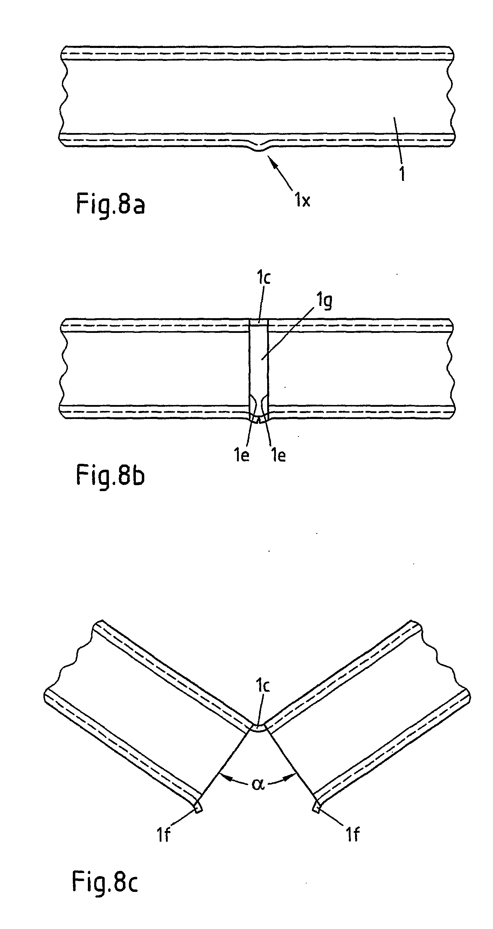

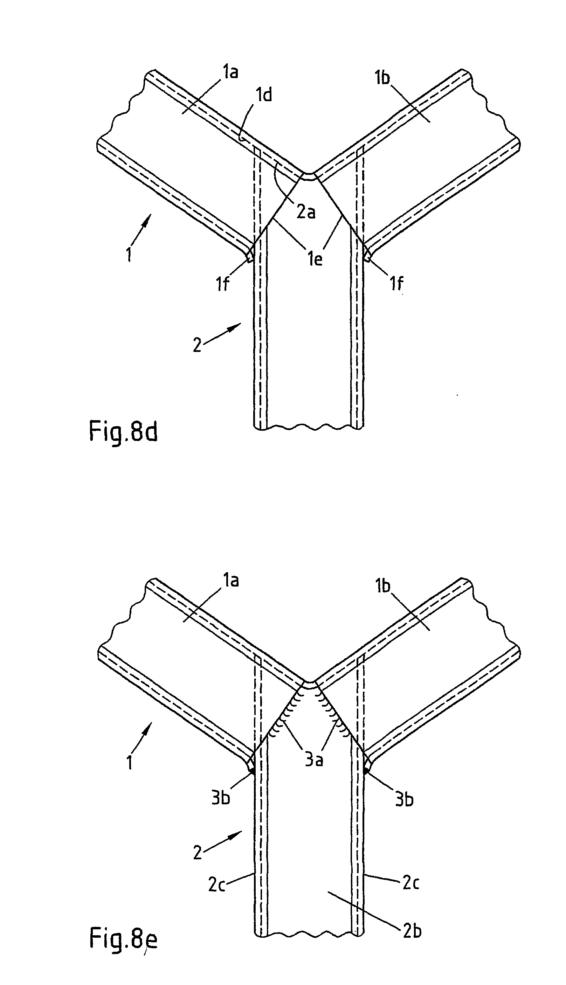

In Fig. 8 a-e sind die einzelnen Verfahrensschritte zur Herstellung der Knotenstruktur dargestellt. Wie in Fig. 8a gezeigt, wird zunächst mittels Innenhochdruckumformens eine Ausformung 1x in eine Seitenfläche des Hohlprofils 1 entlang dessen Umfangs eingebracht. Sodann wird das Hohlprofil 1 vorzugsweise durch Laserstrahlschneiden entlang seines Umfangs bis auf einen Steg 1c aufgetrennt, welcher der Ausformung 1x gegenüberliegt. Dabei wird das Schneidwerkzeug derart geführt, dass zum einen der Trennschnitt mittig durch die Ausformung 1x gelegt wird und zum anderen auf den an den Steg angrenzenden Seiten jeweils ein im wesentlichen rechteckförmiger Streifen 1g symmetrisch zum Trennschnitt ausgeschnitten wird (Fig. 8b). Dadurch werden auf der dem Steg 1c gegenüberliegenden Seite vorstehende umgebogene Randbereiche 1f und auf den an den Steg angrenzenden Seiten zurückgesetzte flache Randbereiche 1e erzeugt. Anschließend wird das Hohlprofil 1 mit einem Biegewinkel α um den Steg 1c aufgebogen (Fig. 8c). In einem nächsten Schritt wird das Hohlprofil 2 in die durch das Auftrennen und anschließende Aufbiegen entstandenen, einander zugekehrten Enden 1a, 1b des Hohlprofils 1 eingesteckt (Fig. 8d), so dass die entsprechend dem Biegewinkel α konturierte Stirnseite 2a des Hohlprofils 2 möglichst spaltfrei an der gemeinsamen Innenseite 1d der beiden Enden 1a, 1b anliegt. In einem in Fig. 8e dargestellten letzten Schritt werden die einander zugekehrten Enden 1a, 1b des Hohlprofils 1 an ihren oberen und unteren zurückgesetzten Randbereichen 1e (s. Fig. 5) mit der Ober- und Unterseite 2b des Hohlprofils 2 verschweißt. Weiterhin werden die Enden 1a, 1b an den vorstehenden Randbereichen 1f mit den Seitenflächen 2c des Hohlprofils 2 verschweißt.

## Patentansprüche

1. Aus zwei Hohlprofilen gebildete y-förmige Knotenstruktur eines Tragrahmens für Fahrzeuge
**dadurch gekennzeichnet, dass**
das erste Hohlprofil (1) mindestens eine ebene Seite aufweist und entlang seines Umfangs bis auf einen in der ebenen Seite liegenden Steg (1c) durchtrennt und um diesen Steg (1c) gebogen ist, und das zweite Hohlprofil (2) stirnseitig in die durch das Trennen und Aufbiegen entstandenen, einander zugekehrten Enden (1a, 1b) des ersten Hohlprofils (1) eingesteckt ist, wobei das erste Hohlprofil (1) an seinen Randbereichen (1e) mit dem zweiten Hohlprofil (2) stoffschlüssig verbunden ist.

2. Knotenstruktur nach Anspruch 1
**dadurch gekennzeichnet, dass**
die Konturen der beiden Hohlprofile (1, 2) möglichst spaltfrei aneinander liegen.

3. Knotenstruktur nach Anspruch 1 oder 2
**dadurch gekennzeichnet, dass**
das erste Hohlprofil (1) an seinen einander zugekehrten Enden (1a, 1b) vorstehende Randbereiche (1f) aufweist,
die an dem zweiten Hohlprofil (2) anliegen.

4. Knotenstruktur nach einem der Ansprüche 1 bis 3
**dadurch gekennzeichnet, dass**
auf den an die ebene Seite angrenzenden Seiten an den Stellen, wo das erste Hohlprofil (1) durchtrennt ist, jeweils ein im wesentlichen rechteckförmiger Streifen (1g) symmetrisch zum Trennschnitt ausgeschnitten ist.

5. Knotenstruktur nach Anspruch 4
**dadurch gekennzeichnet, dass**
der ausgeschnittene Streifen (1g) abgerundete Ecken aufweist.

6. Verfahren zur Herstellung einer aus zwei Hohlprofilen gebildeten y-förmigen Knotenstruktur nach Anspruch 1
**gekennzeichnet durch** folgende Verfahrensschritte:
a) Auftrennen des ersten Hohlprofils (1) entlang seines Umfangs bis auf einen in der ebenen Seite liegenden Steg (1c),
b) Aufbiegen des ersten, teilweise aufgetrennten Hohlprofils (1) um den in der ebenen Seite liegenden Steg (1c),
c) Einstecken des zweiten Hohlprofils (2) in die **durch** das Trennen und Aufbiegen entstandenen, einander zugekehrten Enden des ersten Hohlprofils (1) und
d) stoffschlüssiges Verbinden des zweiten Hohlprofils (2) mit dem ersten Hohlprofil (1) an dessen Randbereichen (1e).

7. Verfahren nach Anspruch 6
**dadurch gekennzeichnet, dass**
das erste Hohlprofil (1) vor dem Auftrennen entlang eines Teils seines Umfangs ausgeformt wird und dass der Trennschnitt mittig durch die Ausformung (1x) gelegt wird

8. Verfahren nach Anspruch 7
**dadurch gekennzeichnet, dass**
die Ausformung (1x) durch Innenhochdruckumformen in das erste Hohlprofil (1) eingebracht wird.

9. Verfahren nach Anspruch 6
**dadurch gekennzeichnet, dass**
die Auftrennung des ersten Hohlprofils (1) durch Laserstrahlschneiden erfolgt.

10. Verfahren nach Anspruch 6
**dadurch gekennzeichnet, dass**
die Hohlprofile (1, 2) durch Schweißen oder Löten verbunden werden.

11. Verfahren nach Anspruch 10
**dadurch gekennzeichnet, dass**
die Schweißung oder Lötung mittels Laserstrahlung erfolgt.

## Claims

1. A y-shaped gusset structure, made from two hollow sections, of a support frame for vehicles
**characterised in that**
the first hollow section (1)
comprises at least one flat side and along its circumference has been cut through except for a web (1c) situated in the flat side, and has been bent open around this web (1c), and **in that** the face of the second hollow section (2) has been inserted into the facing ends (1a, 1b) of the first hollow section (1), which facing ends (1a, 1b) have been created by the process of cutting and bending-open, wherein the edge regions (1e) of the first hollow section (1) are integrally connected with the second hollow section (2).

2. The gusset structure according to claim 1,
**characterised in that**
the contours of the two hollow sections (1, 2) are adjacent to each other as far as possible without any gap.

3. The gusset structure according to claim 1 or 2,
**characterised in that**
the facing ends (1a, 1b) of the first hollow section (1) comprise protruding edge regions (1f) which adjoin the second hollow section (2).

4. The gusset structure according to any one of claims 1 to 3,
**characterised in that**
on the sides adjoining the flat side, at the positions where the first hollow section (1) has been cut, in each instance an essentially rectangular strip (1g) has been cut out symmetrically in relation to the separation cut.

5. The gusset structure according to claim 4,
**characterised in that**
the cut-out strip (1g) comprises rounded corners.

6. A method for producing a y-shaped gusset structure, made from two hollow sections, according to claim 1,
**characterised by**
the following method-related steps:
a) Cutting open the first hollow section (1) along its circumference except for a web (1c) situated in the flat side;
b) Bending up the first hollow section (1), which has been partly cut open, around the web (1c) positioned in the flat side;
c) Inserting the second hollow section (2) into the facing ends of the first hollow section (1), which ends have resulted from being cut and bent up; and
d) Integral connection of the second hollow section (2) with the first hollow section (1) at its edge regions (1e).

7. The method according to claim 6,
**characterised in that**
before it is cut open, the first hollow section (1) is given an outward bulge (1x) around part of its circumference, and **in that** the separating cut is made through the middle of said outward bulge (1x).

8. The method according to claim 7,
**characterised in that**
the outward bulge (1x) is made in the first hollow section (1) by interior high-pressure metal forming.

9. The method according to claim 6,
**characterised in that**
the cutting open of the first hollow section (1) takes place by laser beam cutting.

10. The method according to claim 6,
**characterised in that**
the hollow sections (1, 2) are connected by welding or soldering.

11. The method according to claim 10,
**characterised in that**
welding or soldering is carried out using laser beam technology.

## Revendications

1. Structure de liaison en Y d'un cadre porteur pour véhicule formée de deux profilés creux, **caractérisée en ce que** le premier profilé creux (1) présente au moins une face plane et est séparé sur son périmètre à l'exception d'une traverse reposant dans la face plane (1c) et plié autour de cette traverse (1c) et le deuxième profilé creux (2) est emboîté par sa face frontale dans les extrémités (1a, 1b) adjacentes l'une à l'autre, formées par la séparation et le pliage, le premier profilé creux (1) étant lié sur ses bords (1e) au deuxième profilé creux en formant une unité de matériau.

2. Structure de liaison selon la revendication 1, **caractérisée en ce que** les contours des deux profilés creux (1, 2) sont placés l'un contre l'autre le plus possible sans écart.

3. Structure de liaison selon la revendication 1 ou 2, **caractérisée en ce que** le premier profilé creux (1) présente sur ses extrémités (1a, 1b) adjacentes l'une à l'autre des bords faisant saillie (1f) reposant sur le deuxième profilé creux (2).

4. Structure de liaison selon l'une des revendications 1 à 3, **caractérisée en ce que** sur chacune des extrémités bordant la surface plane sur les points où le premier profilé creux (1) est sectionné, une bande (1g) principalement de forme rectangulaire est coupée symétriquement à la coupure.

5. Structure de liaison selon la revendication 4, **caractérisée en ce que** la bande (1g) découpée présente des angles arrondis.

6. Procédé de fabrication d'une structure de liaison en Y formée de deux profilés creux selon la revendication 1, **caractérisée par** les étapes de procédé suivantes :
a) séparation du premier profilé creux (1) sur son périmètre à l'exception d'une traverse (1c) reposant dans la face plane,
b) pliage du premier profilé creux (1) partiellement sectionné autour de la traverse (1c) dans la face plane,
c) emboîtement du deuxième profilé creux (2) dans les extrémités adjacentes l'une à l'autre formées par la séparation et le pliage et
d) liaison formant une unité de matériau du deuxième profilé creux (2) avec le premier profilé creux (1) sur ses bords (1e).

7. Procédé selon la revendication 6 **caractérisé en ce que** le premier profilé creux (1) est formé avant la séparation sur une partie de son périmètre et la coupure se retrouve au centre du fait de la formation (1x).

8. Procédé selon la revendication 7, **caractérisé en ce que** la formation (1x) est introduite dans le premier profilé creux (1) par des déformations internes haute pression.

9. Procédé selon la revendication 6, **caractérisé en ce que** la séparation du premier profilé creux (1) s'effectue par une découpe au faisceau laser.

10. Procédé selon la revendication 6, **caractérisé en ce que** les profilés creux (1, 2) sont liés par soudage ou pas brasage.

11. Procédé selon la revendication 10, **caractérisé en ce que** le soudage ou le brasage s'effectue par faisceau laser.
